# FASCICULE DE BREVET EUROPEEN

(11) **EP 2 931 049 B1**
(45) Date de publication et mention de la délivrance du brevet: **03.04.2019**
(21) Numéro de dépôt: 13819011.1
(22) Date de dépôt: 17.12.2013
(51) Int. Cl.: A01N 63/00, A01N 65/00, A01N 65/08, A01P 21/00

(54) **COMPOSITION POUR STIMULER LA VITALITE DES PLANTES**
ZUSAMMENSETZUNG ZUR STIMULIERUNG DER PFLANZENVITALITÄT
COMPOSITION FOR STIMULATING PLANT VITALITY

(30) Priorité: 17.12.2012 FR 1262169
(43) Date de publication de la demande: 21.10.2015
(73) Titulaire: Bionov, 84000 Avignon (FR)
(72) Inventeur: LACAN, Dominique, F-34080 Montpellier (FR); DREYER, Alain, F-84470 Chateauneuf de Gadagne (FR); YARD, Christian, F-30250 Combas (FR); LEMAIRE, Benoît, F-33500 Libourne (FR)
(74) Mandataire: Regimbeau
(86) Numéro de dépôt international: PCT/EP2013/076950
(87) Numéro de publication internationale: WO 2014/095900

(56) Documents cités:
- WO-A2-2004/095926
- WO-A2-2009/042090
- FR-A1- 2 785 909
- GB-A- 2 278 347

## Description

La présente invention a trait à l'utilisation d'une composition comprenant une enzyme super-oxyde dismutase (SOD) et/ou un extrait végétal actif contenant de la SOD de *Cucumis melo* pour stimuler la surexpression des protéines enzymatiques anti-oxydantes des plantes, ayant pour effet de stimuler la vitalité des plantes et/ou de les protéger de stress biotiques ou abiotiques.

L'utilisation de cette composition selon la présente invention permet d'améliorer l'état physiologique et agronomique des végétaux en les protégeant notamment de *stress biotiques* ou *abiotiques.* Par ailleurs, l'utilisation de cette composition selon la présente invention doit permettre d'améliorer le rendement et la qualité des végétaux.

En outre, l'utilisation de la composition selon la présente invention est préventive et curative et peut être accomplie par voie humide (pulvérisation ou arrosage des feuillages) ou par voie sèche (incorporation au sol ou au support de culture) sur des plantes cultivées potentiellement soumises à divers *stress biotiques* ou *abiotiques.*

La présente invention, en plaçant la plante dans des conditions de défense améliorée vis-à-vis des agressions diverses de son environnement (parasitisme, agressions climatiques ou autres), contribue à une réduction de l'utilisation d'intrants, en particulier des intrants phytopharmaceutiques, et participe ainsi à une meilleure défense globale de l'environnement dans des conditions d'agriculture écologiquement intensive.

L'oxygène est indispensable au fonctionnement des cellules. Cependant, il peut être à l'origine de formes réactives oxygénées toxiques qui ont un effet négatif sur le développement des plantes.

Dans les systèmes biologiques, les espèces réactives oxygénées (ERO) représentent en particulier des radicaux libres comme le radical super-oxyde (O₂^{•-}), le radical hydroxyle (OH^{•}), le monoxyde d'azote (NO^{•}) ou des radicaux peroxydes d'origine lipidique (L-OO^{•}). Ces radicaux libres sont des atomes ou des molécules dont la configuration électronique est caractérisée par la présence d'un électron de valence non apparié. Cette particularité rend ces espèces chimiques instables et elles peuvent, pour se stabiliser, oxyder rapidement d'autres molécules biologiques comme les acides nucléiques (ADN), les protéines enzymatiques ou les lipides membranaires, en particulier les acides gras polyinsaturés (AGPI).

L'ion super-oxyde est le radical libre le plus couramment et le plus abondamment généré dans les cellules. Il représente donc un danger considérable pour les systèmes biologiques. Sa toxicité dépend surtout de sa transformation en d'autres réactifs plus agressifs tels que le radical hydroxyle (OH^{•}).

Les cellules végétales agissent en permanence pour lutter contre la formation des ERO au moyen de différents processus de défense, en particulier des actions anti-oxydantes, qui permettent de détoxifier les cellules. Ces différents processus de défense des plantes sont décrits ci-dessous.

La première ligne de défense est assurée par une enzyme appelée la super-oxyde dismutase (SOD). Il existe trois formes de SOD : une contenant du cuivre et de zinc, c'est la Cu/Zn SOD ; une autre contenant du manganèse, la Mn SOD, et enfin une SOD contenant du fer, la Fe SOD.

La SOD joue un rôle clé dans la lutte contre les radicaux libres puisqu'elle permet l'élimination de l'ion super-oxyde. La super-oxyde dismutase est une enzyme capable d'induire la dismutation des ions super-oxydes, suivant les deux demi-réactions suivantes :

O₂^{•-} + SOD-M⁽ⁿ⁺¹⁾⁺ → O₂+ SOD-Mⁿ⁺

O₂^{•-} + 2H⁺ + SOD-Mⁿ⁺ → H₂O₂ + SOD-M⁽ⁿ⁺¹⁾⁺,

avec M représentant l'atome métallique Fe (n = 2), Cu (n = 1) ou Mn (n = 2) de la super-oxyde dismutase.

Néanmoins, comme on peut le voir, cette élimination de l'ion super-oxyde par la SOD conduit à la formation de peroxyde d'hydrogène (H₂O₂) qui est également toxique pour la cellule.

L'action de la SOD doit donc être complétée par une deuxième ligne de défense qui élimine H₂O₂.

Cette deuxième ligne de défense est assurée par deux systèmes enzymatiques que sont celui de la catalase et du cycle ascorbate/glutathion des peroxydases qui assurent la destruction de H₂O₂.

Des protéines transporteur du fer et du cuivre (transferrine, ferritine) sont également impliquées dans la détoxification cellulaire.

Les molécules anti-oxydantes de petite taille : le glutathion, les caroténoïdes, les vitamines A, C (ascorbate), E (tocophérol), l'ubiquinone, les flavonoïdes... Ce sont des pièges (scavengers) des ERO ou des anti-oxydants stoechiométriques moins performants que les anti-oxydants enzymatiques. Cependant, ils contribuent à piéger des ERO notamment des ERO secondaires qui peuvent être formés.

Enfin, certains oligo-éléments (cuivre, zinc, sélénium) sont indispensables pour l'activité des enzymes anti-oxydantes.

Dans des conditions biologiques normales, les cellules végétales produisent constamment, mais en faibles quantités, des ERO, notamment au niveau des systèmes photosynthétiques, qui sont immédiatement neutralisés par les systèmes de défense existants ou qui sont utilisés dans certaines voies de signalisation cellulaire.

Lorsque la production de radicaux libres augmente et/ou s'il existe un déficit en substances anti-oxydantes, cela conduit à un déséquilibre du rapport oxydant/anti-oxydant, appelé *stress oxydant.*

En outre, les végétaux sont en permanence soumis à des *stress biotiques* dus aux attaques parasitaires diverses (champignons, virus, bactéries, insectes...) ou des *stress abiotiques* lié au déficit hydrique, aux carences en minéraux, à la pollution atmosphérique, à la présence de métaux lourds, à la sècheresse, au froid, au stress salin, ou encore au vieillissement. Chacune de ces situations impactent de manière comparable le rendement et la qualité des productions. Chacune de ces situations peut induire également une augmentation de la production en ERO ce qui entraîne pour la plante et pour ses cellules, un état de *stress oxydant.*

Plus précisément, par les termes « stress biotique », on entend, au sens de la présente invention, un stress résultant de l'action d'un organisme vivant sur un autre organisme vivant végétal telle qu'une attaque d'un pathogène.

Par le terme « pathogène », on entend, au sens de la présente invention, un agent biologique responsable d'une maladie infectieuse chez les végétaux, qui peuvent être notamment des virus, des bactéries, des parasites ou encore des protéines de type prions.

Par les termes « stress abiotique », on entend, au sens de la présente invention, un stress lié à un changement d'environnement chez la plante notamment une carence en minéraux, par exemple une carence en azote, un déficit hydrique, une pollution atmosphérique, la présence de métaux lourds, le froid, une salinité excessive (stress salin), ou encore le vieillissement.

Par les termes « stress oxydant », on entend, au sens de la présente invention, un type d'agression des constituants de la cellule végétale dû aux espèces réactives oxygénées (ERO) oxydantes, qui peuvent être en particulier des radicaux libres tels que le radical super-oxyde (O₂^{•-}), le radical hydroxyle (OH^{•}), le monoxyde d'azote (NO^{•}) ou des radicaux peroxydes d'origine lipidique (L-OO^{•}). Par extension, le peroxyde d'hydrogène (H₂O₂) est considéré, selon la présente invention comme une ERO car, en présence de fer sous forme ionique dans les organismes végétaux, il se dismute en deux radicaux hydroxyle selon la réaction de Haber-Weiss.

Quelles que soient les conditions environnementales, l'objectif pour l'Homme est de maintenir la productivité des plantes cultivées. Différentes stratégies ont été proposées pour atteindre ce but.

L'utilisation d'éliciteurs divers (glucanes, chitine, oligogalacturonides...) est souvent proposée pour lutter contre les attaques pathogènes en stimulant les mécanismes de défense naturelle (FR 2 783 523 ; WO 2011/006543).

Des plantes transgéniques sur-exprimant des protéines impliquées dans la défense contre les pathogènes ont également été obtenues (Chamnongpol et al., Proc. Natl. Acad. Sci. USA. 12, 95(10): 5818-5823, 1998), mais l'utilisation de ce type de plantes reste problématique pour les agriculteurs et les consommateurs, en partie en raison du fait que les conséquences sur l'environnement sont aujourd'hui encore mal estimées.

L'apport de micronutriments comme le zinc, le cuivre, le fer, le manganèse pour lutter contre certaines pathologies a été décrit dans le brevet WO 2009/058857. Une carence en certains micronutriments peut entrainer une diminution de la croissance chez le lupin ainsi qu'une diminution de l'activité SOD (Yu, Q. ; Rengel, Z. Annals of Botany 83: 175-182, 1999). Toutefois, un excès en micronutriments peut également être toxique pour la plante (Schubert T.S. Plant Pathology Circular 53, 1992).

Concernant les *stress abiotiques*, la demande de brevet international WO 2004/095926 de Monsanto décrit une méthode de traitement des plantes par un mélange composé d'un antioxydant et d'un pesticide. Dans cette demande, les inventeurs expliquent que ce traitement permet d'améliorer la résistance des plantes et des graines au froid. Cependant, cette demande ne s'applique qu'à l'amélioration de la tolérance des plantes au froid.

Dans le cas des situations de *stress abiotiques*, les défenses anti-oxydantes et en particulier la SOD sont sollicitées. Cependant, afin de lutter contre une surproduction en ERO, on observe, de façon générale, une augmentation de l'activité enzymatique des défenses anti-oxydantes sans augmentation de la synthèse (stock) en protéines anti-oxydantes.

De ce fait, ces systèmes de défense sont rapidement débordés par la production importante et continue en ERO. La réponse et l'adaptation des plantes à ces conditions environnementales dépendent alors de la capacité qu'elles ont à produire suffisamment de molécules anti-oxydantes, en particulier de SOD, pour lutter efficacement contre le stress qu'elles subissent (Raychaudhuri, S. S. ; Deng, X. W. Botan. Rev. 66(1) : 89-98, 2000).

Par exemple, l'adaptation aux sols salés de plantes utiles d'un point de vue agronomique représente un enjeu majeur. Cependant, le stress salin induit une accumulation en ERO qui peut endommager les lipides membranaires, les protéines et l'ADN des plantes (Mansour et al. Gen. Applied Plant Physiol. 31 : 29-41, 2005 ; Ben Amor et al. J. Integr. Plant Biol. 49 : 982-992, 2007).

Alscher et al. (Plant Physiol., 100 : 224-233, 2002) ont montré que la neutralisation des ERO par une activation des enzymes anti-oxydantes améliore la tolérance au sel. Une corrélation positive entre la tolérance au sel et l'augmentation de l'activité des enzymes anti-oxydantes a également été montrée chez le petit pois (Hernandez et al. Plant Cell and Environ. 23 : 853-862, 2000), chez Arabidopsis et le riz (Qi et al. J. Plant Physiol. Mol. Biol. 30 : 517-522, 2004 ; Dionisio-Sese, M. L. ; Tobita, S. Plant Sci 135 : 1-9, 1998), chez la tomate, le soja et le maïs (Azvedo-Neto et al. Environ. Exp. Bot. 56 : 87-94, 2006).

On peut également citer la demande internationale WO 2009/042090, qui concerne une nouvelle SOD d'origine bactérienne (extraite de Deschampsia antarctica). Ce document divulgue les utilisations de ladite SOD en tant que conservateur ayant une activité anti-radicalaire et anti-oxydante. Ainsi, ces sont décrites comme utiles dans la formulation de produits pharmaceutiques et nutraceutiques. L'utilisation de ladite SOD est également décrite pour protéger les fruits et légumes du stress oxydant dû à l'exposition aux UV. Ainsi, seule l'activité anti-oxydante des SOD est divulguée dans WO 2009/042090.

Le document GB 2 278 347 décrit par ailleurs une composition destinée à protéger les arbres de particules contaminantes par injection, ladite composition comprenant un agent permettant d'ouvrir et fermer les stomates, un agent pour éliminer une substance étrangère et un solvant, ladite composition présentant un pH compris entre 4.5 et 8. Dans ce document, les superoxydes dismutases sont citées en tant qu'agents pour éliminer une substance étrangère.

La demande française FR 2 785 909 divulgue quant à elle un extrait de micro-algues possédant une activité anti-radicalaire due à la présence d'enzymes « SOD-like » couplées avec la présence de polysaccharide sulfatés (PS). Cet extrait est par exemple utilisé dans les domaines de la pharmacie, de la cosmétique, de la diététique et dans la lutte contre les parasites des cultures. Les SOD-like sont mentionnées comme ayant une activité anti-inflammatoire, les PS ayant quant à eux une activité régénérante des tissus.

Néanmoins, ces mécanismes anti-oxydants ne sont pas suffisants pour protéger la plante des niveaux de stress élevés. En effet, comme cela a été montré dans des situations de stress par l'ozone, on observe, dans un premier temps, une augmentation de l'activité des enzymes anti-oxydantes cellulaires pour lutter contre les ERO. La conséquence est que le stock de transcrits (mRNA) et de protéines anti-oxydantes s'épuise dans la plante (Van Camp et al. Plant Physiol. 112: 1703-1714, 1996**).** Il s'en suit, dans un deuxième temps, une incapacité pour les cellules de la plante à maintenir un niveau d'activité enzymatique anti-oxydante suffisamment élevé : les systèmes de défense sont acculés et la plante ne peut plus lutter.

L'enjeu est alors de maintenir des quantités en protéines anti-oxydantes suffisamment importantes pour que les plantes puissent vivre dans des conditions environnementales hostiles ou difficiles.

L'utilisation de plantes transgéniques peut répondre à cette problématique. En effet, l'introduction de gènes codant pour la SOD et pour l'ascorbate dans l'organisme de plants de tabac permet à ces plants transgéniques d'améliorer leur tolérance aux pesticides. Cependant, l'introduction d'un seul gène codant pour une enzyme anti-oxydante entraîne une amélioration limitée de la tolérance au stress (Foyer et al. Plant Cell Environ. 17 : 507-523, 1994 ; Allen, R. D. Plant Physiol. 107 : 1049-1054, 1995). Par ailleurs, ce type d'approche aboutit à des constructions génétiques souvent lourdes qui nécessitent l'introduction de plusieurs gènes anti-oxydants pour obtenir une amélioration effective de la résistance à des stress d'origines diverses. A l'instar des plantes transgéniques présentant une résistance aux pathogènes, l'utilisation de ce type de plantes est toujours problématique pour les agriculteurs et les consommateurs et les conséquences sur l'environnement sont encore une fois mal estimées.

Un point commun à toutes ces situations demeure le *stress oxydant.*

Pour répondre à cette problématique, la présente invention a alors pour but d'induire, de façon naturelle et durable, la surexpression des enzymes anti-oxydantes dans la plante afin d'améliorer l'état physiologique et agronomique de la plante et par conséquent sa productivité, de lutter efficacement contre le vieillissement de la plante, de lutter contre les stress biotiques ou abiotiques de façon préventive ou curative.

Les inventeurs ont découvert, de façon surprenante, que l'utilisation d'une composition à base de Super-Oxyde Dismutase (SOD) ou d'un extrait végétal actif comprenant une enzyme super-oxyde dismutase (SOD) et/ou un extrait végétal actif contenant de la SOD de *Cucumis melo* permet de stimuler la surexpression des protéines enzymatiques anti-oxydantes des plantes. Ces protéines enzymatiques anti-oxydantes sont par exemple, la SOD, la catalase et les ascorbate/glutathion peroxydases. Ainsi, l'utilisation selon l'invention, c'est-à-dire d'une composition à base de Super-Oxyde Dismutase (SOD) ou d'un extrait végétal actif comprenant une enzyme super-oxyde dismutase (SOD) et/ou un extrait végétal actif contenant de la SOD de *Cucumis melo,* permet également de stimuler la vitalité des plantes et/ou les protéger de stress biotiques ou abiotiques et/ou d'augmenter leur productivité.

Par « productivité des plantes », on entend au sens de la présente invention la biomasse formée pendant un temps déterminé (généralement un jour ou un an), sur une surface déterminée. De préférence, la productivité des plantes reflète une augmentation de la masse de récolte par rapport à un témoin non traité. On pourra également parler de rendement. La productivité est donc exprimée en pourcentage.

L'utilisation selon la présente invention peut être réalisée sur de jeunes plantes, sur des boutures ou sur des plantes adultes, c'est-à-dire à n'importe quel stade de développement de la plante. L'utilisation selon la présente invention peut également être réalisée sur les semences.

Par « extrait végétal actif contenant de la super-oxyde dismutase », on entend, au sens de la présente invention, tout extrait obtenu à partir de melon, présentant une activité enzymatique en super-oxyde dismutase.

L'enzyme SOD et/ou l'extrait végétal actif selon la présente invention est/sont constitué(s) par ou provient/proviennent d'un extrait protéique de *Cucumis melo,* purifié ou non.

De façon encore plus avantageuse, le *Cucumis Melo* est un descendant de la lignée cellulaire 95LS444 ou de l'une des variétés hybrides issues de 95LS444.

La présente invention a trait à l'utilisation d'une composition à base de Super-Oxyde Dismutase (SOD) ou d'un extrait végétal actif comprenant une enzyme super-oxyde dismutase (SOD) et/ou un extrait végétal actif contenant de la SOD permet de stimuler la surexpression des protéines enzymatiques anti-oxydantes des plantes, afin de stimuler la vitalité des plantes et/ou de les protéger de stress biotiques ou abiotiques et/ou d'augmenter leur productivité, caractérisé en ce que l'extrait végétal selon la présente invention est un extrait protéique de *Cucumis melo,* purifié ou non, de préférence descendant de la lignée cellulaire 95LS444 ou de l'une des variétés hybrides issues de 95LS444.

L'utilisation selon l'invention d'une composition à base de Super-Oxyde Dismutase (SOD) ou d'un extrait végétal actif comprenant une enzyme super-oxyde dismutase (SOD) et/ou un extrait végétal actif contenant de la SOD de *Cucumis melo* permet de stimuler la surexpression des protéines enzymatiques anti-oxydantes des plantes, afin de stimuler la vitalité des plantes et/ou de les protéger de stress biotiques ou abiotiques, et est caractérisée en ce que l'extrait végétal selon la présente invention est un extrait protéique de *Cucumis melo,* purifié ou non, de préférence descendant de la lignée cellulaire 95LS444 ou de l'une des variétés hybrides issues de 95LS444

En particulier, l'utilisation selon la présente invention a trait à un traitement curatif ou préventif du stress biotique ou abiotique des plantes.

Dans un mode de réalisation particulier de la présente invention, l'activité enzymatique en super-oxyde dismutase de la SOD et/ou de l'extrait végétal actif contenant de la SOD de *Cucumis melo* est au moins égale à 5 unités enzymatiques par milligramme, avantageusement au moins égale à 50 unités enzymatiques par milligramme dudit extrait.

Dans un mode de réalisation préféré de l'invention, l'utilisation d'une composition comprenant une enzyme super-oxyde dismutase (SOD) et/ou un extrait végétal actif contenant de la SOD pour stimuler la surexpression des protéines enzymatiques anti-oxydantes des plantes, afin de stimuler la vitalité des plantes et/ou de les protéger de stress biotiques ou abiotiques est caractérisée en ce que l'enzyme SOD et/ou l'extrait végétal actif est/sont constitué(s) par ou provient/proviennent d'un extrait protéique de *Cucumis melo,* purifié ou non, de préférence un descendant de la lignée cellulaire 95LS444 ou de l'une des variétés hybrides issues de 95LS444, possède(nt) une activité enzymatique en SOD égale à au moins 5 unités enzymatiques, avantageusement au moins égale à 50 unités enzymatiques par milligramme dudit extrait.

L'extrait végétal actif selon l'invention peut être obtenu par des méthodes bien connues de l'homme du métier, en particulier par le procédé décrit dans la demande de brevet FR 2 716 884.

Avantageusement, l'utilisation de la composition selon la présente invention vise la stimulation des enzymes super-oxydes dismutases, peroxydases et catalases, préférentiellement des enzymes super-oxydes dismutases et peroxydases.

En outre, la composition selon la présente invention contient au moins un constituant choisi parmi le groupe formé du coenzyme Q10, des vitamines telles que les vitamines B₁ à B₁₂, les vitamines C, A et D ou encore la vitamine E, de l'acide lipoïque, du glutathion, des flavonoïdes et des éléments minéraux tels que le potassium, le magnésium, le calcium ou encore le sélénium, ou leurs mélanges.

Dans un mode de réalisation particulier de la présente invention, l'enzyme SOD et/ou l'extrait végétal actif de l'invention est/sont mélangé(s) à l'eau, préférentiellement en présence d'au moins un tensioactif. Les tensioactifs adaptés à l'utilisation selon la présente invention sont connus de l'homme de l'art. Le tensioactif peut être utile pour améliorer le contact entre la plante et les substances actives.

Par le terme « tensioactif », on entend, au sens de la présente invention, un composé amphiphile qui modifie la tension superficielle entre deux surfaces permettant ainsi de solubiliser deux phases non miscibles. Au sens de la présente invention, ce composé tensioactif peut être anionique comme les tensioactifs de type carboxylates (R-CO₂⁻), les tensioactifs de type sulfonates (R-SO₃⁻), les tensioactifs de type sulfates (SO₄²⁻), cationique comme tensioactifs de type ammoniums primaires, secondaires et tertiaires (R₁-NH₃⁺, R₂-NH₂⁺, R₃-NH⁺), ammoniums quaternaires (R₄-N⁺), zwitterionique comme les tensioactifs de type bétaïnes ou phospholipides, ou non ionique comme les tensioactifs de type esters, polyols ou les éthoxylates d'alcool.

Dans un autre mode de réalisation particulier de la présente invention, la teneur en enzyme SOD de la composition selon l'invention est comprise entre 100 UI SOD/L et 10 000 UI SOD/L, préférentiellement comprise entre 100 UI SOD/L et 5000 UI SOD/L, encore plus préférentiellement égale à 1000 UI SOD/L.

Selon un mode de réalisation particulier de la présente invention, l'enzyme SOD et/ou l'extrait végétal actif de l'invention est/sont mélangé(s) à de la terre et/ou du terreau et/ou incorporé(s) dans la solution nutritive des plantes.

Par « solution nutritive », on entend au sens de la présente invention une solution aqueuse comprenant de préférence des éléments nutritifs pour la plante, tels que des oligoéléments, des substances fertilisantes, des engrais, des produits phytosanitaires par exemple, de manière encore préférée des oligoéléments, des substances fertilisantes, des engrais.

Selon un autre mode de réalisation particulier de l'invention, l'enzyme SOD et/ou l'extrait végétal actif de l'invention est pulvérisé(e) sur la plante à traiter.

Selon un autre mode de réalisation particulier de la présente invention, l'enzyme SOD et/ou l'extrait végétal actif de l'invention est/sont sous forme de poudre.

De plus, dans un autre mode de réalisation particulier de la présente invention, l'enzyme SOD et/ou l'extrait végétal actif de l'invention est/sont encapsulé(s).

Selon la présente invention, l'encapsulation peut permettre la vectorisation et/ou la libération prolongée des substances actives destinées à traiter les plantes. D'une manière générale, l'encapsulation peut améliorer l'efficacité de l'utilisation de la composition selon la présente invention. L'encapsulation peut être réalisée à partir de techniques connues de l'homme du métier.

En outre, dans un autre mode de réalisation particulier de la présente invention, la composition utilisée peut contenir une ou plusieurs substance(s) choisie(s) parmi les produits phytopharmaceutiques, les oligo-éléments, les substances nutritives ou fertilisantes, ou tout intrant utilisé en culture végétale, ainsi que leurs mélanges.

Dans un mode de réalisation particulier, la composition utilisée est dépourvue de produits phytopharmaceutiques ou phytosanitaires de type pesticide.

Par ailleurs, un autre objet de la présente invention concerne l'utilisation de l'enzyme SOD et/ou de l'extrait végétal actif de la présente invention qui est caractérisée en ce que l'enzyme SOD et/ou l'extrait végétal actif est/sont obtenu(s) par :
(1) le broyage d'au moins un végétal contenant de la SOD,
(2) éventuellement, le séchage du broyat et/ou l'encapsulation du broyat,
(3) a- le mélange du broyat, encapsulé ou non, à de l'eau, éventuellement en présence d'un tensioactif, ou
(3) b- le mélange du broyat, encapsulé on non, à de la terre et/ou du terreau.

Ledit végétal de l'invention est un *Cucumis melo,* de préférence un descendant de la lignée cellulaire 95LS444 ou de l'une des variétés hybrides issues de 95LS444.

Selon un mode de réalisation particulier de la présente invention, la composition est pulvérisée en direction des plantes à traiter ou épandue sur le sol ou le milieu de culture des plantes à traiter.

Selon un autre mode de réalisation particulier de la présente invention, la composition est utilisée sous forme de poudre et mélangée à de la terre ou du terreau pour ensuite être apportée à la plante.

Enfin, selon un autre mode de réalisation particulier de la présente invention, le procédé de ladite invention est destiné à un usage curatif ou préventif des *stress biotiques* et/ou *abiotiques* des plantes.

Par le terme de « plante », on entend, au sens de la présente invention, les plantes de grandes cultures, les plantes de cultures industrielles, les plantes fourragères, les plantes médicinales, les plantes de viticulture, les plantes arboricoles, les plantes maraîchères, les plantes horticoles, les plantes de pépinières, d'espaces verts, ou encore les plantes ornementales, ainsi que les mélanges de celles-ci.

### Figures

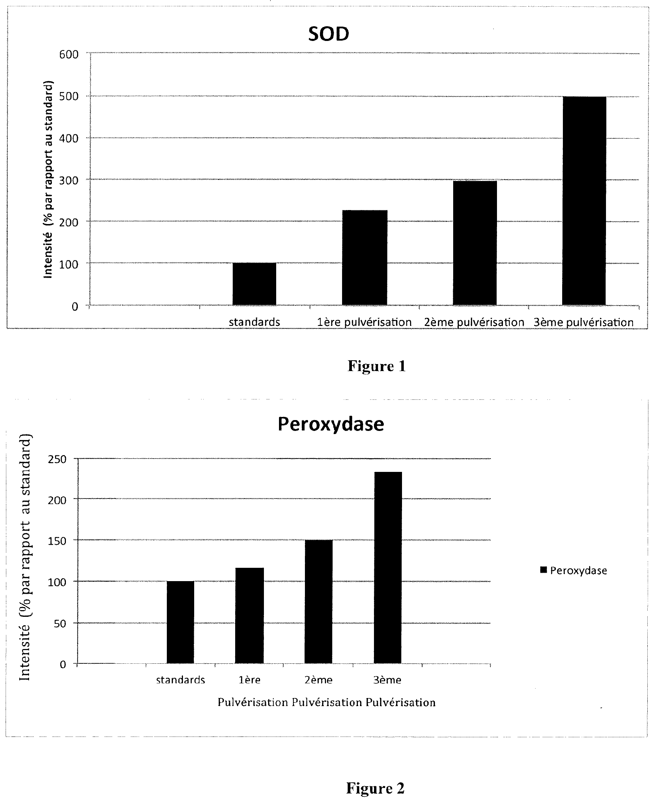

Figure 1: La figure 1 représente un histogramme évaluant l'intensité en pourcentage par rapport au standard de la production de SOD des plantes. Le protocole de mesure est décrit dans l'exemple 1. Le standard correspond à 100%, puis les résultats pour les plantes ayant un premier traitement une semaine après semis (t = 0), un deuxième traitement une semaine plus tard (t = 1 semaine), un troisième traitement deux semaines après (t = 3 semaines) sont présentés. Le standard correspond à une plante non traitée.
Figure 2: La figure 2 représente un histogramme évaluant l'intensité en pourcentage par rapport au standard de la production de peroxydase des plantes. Le protocole de mesure est décrit dans l'exemple 1. Le standard correspond à 100%, puis les résultats pour les plantes ayant un premier traitement une semaine après semis (t = 0), un deuxième traitement une semaine plus tard (t = 1 semaine), un troisième traitement deux semaines après (t = 3 semaines) sont présentés. Le standard correspond à une plante non traitée.

Les exemples montrés ci-après servent à illustrer la présente invention mais ne doivent en aucun cas être considérés comme limitatifs.

### Exemple 1 : Utilisation sur plantes ne subissant pas de stress.

L'efficacité de l'extrait de melon pour stimuler la production de certaines molécules impliquées dans les défenses de la plante, notamment les superoxyde dismutases (SOD) et les peroxydases et augmenter la vitalité des plantes a été évaluée sur différentes variétés de végétaux (laitues, melon, tomate). L'exemple 1 rapporte les résultats d'un de ces tests réalisé sur plantules de tomates.

On mélange alors entre 0.001 g et 10 g de poudre d'extrait de melon riche en SOD dont l'activité est de 100 UI SOD/mg de poudre, préférentiellement 0.01 g dans un litre d'eau et on pulvérise cette solution sur les plantes.

Trois traitements préventifs seront réalisés avec la solution d'extrait de melon : un premier traitement une semaine après semis (t = 0), un deuxième traitement une semaine plus tard (t = 1 semaine), un troisième traitement deux semaines après (t = 3 semaines). On compare les plantes traitées à des plantes non traitées. A la fin de chaque traitement, 5 plantes sont prélevées et la quantité de SOD et de peroxydase est mesurée dans les feuilles.

L'évolution de la production de SOD (voir figure 1) et de peroxydase (voir figure 2) est mesurée dans la feuille de tomate par immunoblotting (western blot).

Les feuilles de tomate sont broyées dans une solution tampon de phosphate de potassium. Le mélange obtenu est ensuite centrifugé puis filtré. Les extraits ainsi obtenu sont ensuite déposés sur gel d'électrophorèse pour séparer les différentes protéines. Après séparation, les protéines sont transférées sur membranes de nitrocellulose. Les protéines antioxydantes (SOD et peroxydases) sont détectées par western blotting. Des anticorps primaires contre les SOD et peroxydases de tomate sont utilisés pour mesurer l'expression des SOD et peroxydases. Ensuite, un anticorps secondaire couplé à de la phosphatase alcaline est utilisé pour révéler les premiers anticorps. Un scan des membranes permet de mesurer l'intensité des bandes obtenues. Les données sont standardisées en exprimant l'intensité de chaque bande d'intérêt pour les plantes traitées par comparaison avec la bande correspondante pour les plantes témoins.

Les résultats présentés en figures 1 et 2, montrent que la pulvérisation de l'extrait de melon sur les feuilles des plantules de tomate induit la synthèse endogène de SOD et de peroxydase. La synthèse de ces deux enzymes augmente avec le nombre de pulvérisations.

### Exemple 2 : Utilisation sur plantes subissant un stress biotique.

Comme dans l'exemple 1, on pulvérise l'extrait de melon sur des plantes puis on teste la résistance des plantes à différents parasites.

A titre d'exemples, des résultats significatifs ont été obtenus sur un modèle tomate/ mildiou (*Phytophtora infestans*), en préventif et en curatif.

Les plantes traitées par pulvérisation de l'extrait de melon sont comparées à des plantes non traitées.

Dans le cas de traitements préventifs, des premiers résultats montrent que les plantes traitées sont peu ou pas attaquées par le parasite. L'efficacité est alors corrélée au nombre de traitements.

Dans le cas de traitements curatifs, on observe une diminution des symptômes de l'attaque parasitaire quelques jours après le premier traitement.

### Exemple 3 : Utilisation sur plantes subissant un stress abiotique.

Comme dans l'exemple 1, on pulvérise l'extrait de melon sur des plantes puis on teste la résistance des plantes à différents stress (stress hydrique, froid, sècheresse, ozone, déficience en micronutriments,...).

A titre d'exemples, des résultats significatifs ont été obtenus sur un modèle de tomate subissant un stress hydrique.

Les plantes traitées par l'extrait de melon sont comparées à des plantes non traitées.

Dans le cas de traitements préventifs, les plantes traitées sont peu ou pas affectées par le stress hydrique. L'efficacité est alors corrélée au nombre de traitements.

Dans le cas de traitements curatifs, on observe une diminution des symptômes liés au stress hydrique quelques jours après le premier traitement.

## Revendications

1. Utilisation d'une composition comprenant une enzyme super-oxyde dismutase (SOD) et/ou un extrait végétal actif contenant de la SOD, ladite SOD ou ledit extrait végétal actif étant constitué par ou provenant d'un extrait protéique de *Cucumis Melo*, purifié ou non, pour stimuler la surexpression des protéines enzymatiques anti-oxydantes des plantes.

2. Utilisation selon la revendication 1, **caractérisée en ce que** ladite composition permet également de stimuler la vitalité des plantes et/ou d'augmenter leur productivité et/ou les protéger de stress biotiques ou abiotiques de façon préventive ou curative.

3. Utilisation selon la revendication 1 ou 2, **caractérisée en ce que** le *Cucumis Melo* est un descendant de la lignée cellulaire 95LS444 ou de l'une des variétés-hybrides issues de 95LS444.

4. Utilisation selon l'une quelconque des revendications 1 à 3, **caractérisée en ce que** l'enzyme SOD et/ou l'extrait végétal actif contenant de la SOD possède(nt) une activité enzymatique en SOD égale à au moins 5 unités enzymatiques par milligramme dudit extrait.

5. Utilisation selon l'une quelconque des revendications 1 à 4, **caractérisée en ce que** les protéines enzymatiques anti-oxydantes sont les super-oxydes dismutases, les peroxydases et les catalases.

6. Utilisation selon l'une quelconque des revendications 1 à 5, **caractérisée en ce que** la composition contient au moins un constituant choisi parmi le groupe formé du coenzyme Q10, des vitamines, de l'acide lipoïque, du glutathion, des flavonoïdes et des éléments minéraux, ou leurs mélanges.

7. Utilisation selon l'une quelconque des revendications 1 à 6, **caractérisée en ce que** l'enzyme SOD et/ou l'extrait végétal actif est/sont mélangé(s) à l'eau.

8. Utilisation selon l'une quelconque des revendications 1 à 7, **caractérisée en ce que** la teneur en enzyme SOD et/ou en extrait végétal actif de la composition est comprise entre 100 UI SOD/L et 10 000 UI SOD/L.

9. Utilisation selon l'une quelconque des revendications 1 à 8, **caractérisée en ce que** la composition est pulvérisée en direction des plantes à traiter.

10. Utilisation selon l'une quelconque des revendications 1 à 6, **caractérisée en ce que** l'enzyme SOD et/ou l'extrait végétal actif est/sont mélangé(s) à de la terre et/ou du terreau et/ou incorporé(s) à la solution nutritive des plantes.

11. Utilisation selon l'une quelconque des revendications 1 à 6 et 10, **caractérisée en ce que** l'enzyme SOD et/ou l'extrait végétal actif est/sont sous forme de poudre.

12. Utilisation selon l'une quelconque des revendications 1 à 6, 10 et 11, **caractérisée en ce que** l'enzyme SOD et/ou l'extrait végétal actif est/sont encapsulé(s).

13. Utilisation selon l'une quelconque des revendications 1 à 6, et 10 à 12, **caractérisée en ce que** la composition contient une ou plusieurs substance(s) choisie(s) parmi les produits phytopharmaceutiques, les oligo-éléments, les substances nutritives ou fertilisantes, ou tout intrant utilisé en culture végétale, ainsi que leurs mélanges.

14. Utilisation selon l'une quelconque des revendications 1 à 13, **caractérisée en ce que** l'enzyme SOD et/ou l'extrait végétal actif est/sont obtenu(s) par :
(1) le broyage d'au moins un végétal contenant de la SOD,
(2) optionnellement, le séchage du broyat et/ou l'encapsulation du broyat,
(3) a- le mélange du broyat, encapsulé ou non, à de l'eau, optionnellement en présence d'un tensioactif, ou
(3) b- le mélange du broyat, encapsulé on non, à de la terre et/ou du terreau.

15. Utilisation selon l'une quelconque des revendications 1 à 8 et 10 à 14, **caractérisée en ce que** la composition est épandue sur le sol ou le milieu de culture des plantes à traiter.

## Patentansprüche

1. Verwendung einer Zusammensetzung, umfassend ein Enzym Superoxiddismutase (SOD) und/oder einen pflanzlichen Wirkstoffextrakt, der SOD enthält, wobei die SOD oder der pflanzliche Wirkstoffextrakt gebildet ist von oder stammt aus einem Proteinextrakt von *Cucumis Melo,* gereinigt oder nicht, um die Überexpression der antioxidativen enzymatischen Proteine der Pflanzen zu stimulieren.

2. Verwendung nach Anspruch 1, **dadurch gekennzeichnet, dass** die Zusammensetzung ebenfalls erlaubt, die Vitalität der Pflanzen zu stimulieren und/oder ihre Produktivität zu erhöhen und/oder sie vor biotischem oder abiotischem Stress präventiv oder kurativ zu schützen.

3. Verwendung nach Anspruch 1 oder 2, **dadurch gekennzeichnet, dass** *Cucumis Melo* ein Abkömmling der Zelllinie 95LS444 oder einer der Hybridvarietäten von 95LS444 ist.

4. Verwendung nach einem der Ansprüche 1 bis 3, **dadurch gekennzeichnet, dass** das Enzym SOD und/oder der pflanzliche Wirkstoffextrakt, welcher SOD enthält, eine enzymatische SOD-Aktivität von mindestens gleich 5 Enzymeinheiten pro Milligramm des Extrakts besitzt.

5. Verwendung nach einem der Ansprüche 1 bis 4, **dadurch gekennzeichnet, dass** die antioxidativen enzymatischen Proteine die Dismutase-Superoxide, die Peroxydasen und die Catalasen sind.

6. Verwendung nach einem der Ansprüche 1 bis 5, **dadurch gekennzeichnet, dass** die Zusammensetzung mindestens einen Bestandteil enthält, der aus der Gruppe ausgewählt ist, die von dem Coenzym Q10, den Vitaminen, der Liponsäure, dem Glutathion, den Flavonoiden und den mineralischen Elementen oder deren Gemischen gebildet ist.

7. Verwendung nach einem der Ansprüche 1 bis 6, **dadurch gekennzeichnet, dass** das Enzym SOD und/oder der pflanzliche Wirkstoffextrakt mit Wasser gemischt ist/sind.

8. Verwendung nach einem der Ansprüche 1 bis 7, **dadurch gekennzeichnet, dass** der Gehalt an Enzym SOD und/oder an pflanzlichem Wirkstoffextrakt der Zusammensetzung zwischen 100 UI SOD/L und 10.000 UI SOD/L liegt.

9. Verwendung nach einem der Ansprüche 1 bis 8, **dadurch gekennzeichnet, dass** die Zusammensetzung in Richtung der zu behandelnden Pflanzen zerstäubt wird.

10. Verwendung nach einem der Ansprüche 1 bis 6, **dadurch gekennzeichnet, dass** das Enzym SOD und/oder die pflanzliche Wirkstoffextrakt mit der Erde und/oder dem Mutterboden gemischt und/oder in die Nährlösung der Pflanzen eingearbeitet wird/werden.

11. Verwendung nach einem der Ansprüche 1 bis 6 und 10, **dadurch gekennzeichnet, dass** das Enzym SOD und/oder der pflanzliche Wirkstoffextrakt in Pulverform ist/sind.

12. Verwendung nach einem der Ansprüche 1 bis 6, 10 und 11, **dadurch gekennzeichnet, dass** das Enzym SOD und/oder der pflanzliche Wirkstoffextrakt eingekapselt ist/sind.

13. Verwendung nach einem der Ansprüche 1 bis 6, und 10 bis 12, **dadurch gekennzeichnet, dass** die Zusammensetzung eine oder mehrere Substanzen enthält, die aus den phytopharmazeutischen Produkten, den Spurenelementen, den nährenden oder düngenden Substanzen oder jeder Zugabe, die im Feldbau verwendet wird, sowie deren Gemischen ausgewählt ist/sind.

14. Verwendung nach einem der Ansprüche 1 bis 13, **dadurch gekennzeichnet, dass** das Enzym SOD und/oder der pflanzliche Wirkstoffextrakt gewonnen wird/werden durch:
(1) das Zerkleinern mindestens einer Pflanze, die SOD enthält,
(2) optional das Trocknen des Zerkleinerungsprodukts und/oder das Einkapseln des Zerkleinerungsprodukts,
(3) a- das Mischen des eingekapselten oder nicht eingekapselten Zerkleinerungsprodukts mit Wasser, optional bei Anwesenheit eines Tensids, oder
(3) b- das Mischen des eingekapselten oder nicht eingekapselten Zerkleinerungsprodukts mit Erde und/oder Mutterboden.

15. Verwendung nach einem der Ansprüche 1 bis 8 und 10 bis 14, **dadurch gekennzeichnet, dass** die Zusammensetzung auf dem Boden oder im Anbaubereich der zu behandelnden Pflanzen verteilt wird.

## Claims

1. Use of a composition comprising a superoxide dismutase (SOD) enzyme and/or an active plant extract containing SOD, said SOD or said active plant extract being composed of or coming from a purified or unpurified protein extract of *Cucumis Melo,* for stimulating overexpression of antioxidant enzyme proteins in plants.

2. Use according to claim 1, **characterized in that** said composition also stimulates plant vitality and/or increases plant productivity and/or preventively or curatively protects plants against biotic or abiotic stresses.

3. Use according to claim 1 or 2, **characterized in that** the *Cucumis Melo* is a descendant of cell line 95LS444 or one of the hybrid varieties arising from 95LS444.

4. Use according to any one of claims 1 to 3, **characterized in that** the SOD enzyme and/or the active plant extract containing SOD have/has SOD enzyme activity equal to at least 5 enzyme units per milligram of said extract.

5. Use according to any one of claims 1 to 4, **characterized in that** the antioxidant enzyme proteins are superoxide dismutases, peroxidases and catalases.

6. Use according to any one of claims 1 to 5, **characterized in that** the composition contains at least one component selected from the group consisting of coenzyme Q10, vitamins, lipoic acid, glutathione, flavonoids and mineral elements, or mixtures thereof.

7. Use according to any one of claims 1 to 6, **characterized in that** the SOD enzyme and/or the active plant extract are/is mixed with water.

8. Use according to any one of claims 1 to 7, **characterized in that** the SOD enzyme and/or active plant extract content in the composition is between 100 IU SOD/L and 10 000 IU SOD/L.

9. Use according to any one of claims 1 to 8, **characterized in that** the composition is sprayed towards the plants to be treated.

10. Use according to any one of claims 1 to 6, **characterized in that** the SOD enzyme and/or the active plant extract are/is mixed with the soil and/or the compost and/or added to the nutrient solution of the plants.

11. Use according to any one of claims 1 to 6 and 10, **characterized in that** the SOD enzyme and/or the active plant extract are/is in powder form.

12. Use according to any one of claims 1 to 6, 10 and 11, **characterized in that** the SOD enzyme and/or the active plant extract are/is encapsulated.

13. Use according to any one of claims 1 to 6, and 10 to 12, **characterized in that** the composition contains one or more substance(s) selected from plant protection products, trace elements, nutrients or fertilizers, or any input used in plant cultivation, and mixtures thereof.

14. Use according to any one of claims 1 to 13, **characterized in that** the SOD enzyme and/or the active plant extract are/is obtained by:
(1) grinding at least one plant that contains SOD,
(2) optionally, drying the ground material and/or encapsulating the ground material,
(3) a- mixing the encapsulated or non-encapsulated ground material with water, optionally in the presence of a surfactant, or
(3) b- mixing the encapsulated or non-encapsulated ground material with soil and/or compost.

15. Use according to any one of claims 1 to 8 and 10 to 14, **characterized in that** the composition is spread on the soil or the growth medium of the plants to be treated.
